# EUROPÄISCHE PATENTSCHRIFT

(11) **EP 0 535 255 B1**
(45) Veröffentlichungstag und Bekanntmachung des Hinweises auf die Patenterteilung: **05.11.1997**
(21) Anmeldenummer: 91114632.2
(22) Anmeldetag: 30.08.1991
(51) Int. Cl.: F01P 7/02, F01P 11/10, B60K 11/00, F01P 11/12, F01P 1/06

(54) **Kühlvorrichtung für einen Verbrennungsmotor in einem Kraftfahrzeug**
Cooling arrangement for an internal combustion engine in a vehicle
Dispositif de refroidissement pour un moteur à combustion interne à un véhicule

(43) Veröffentlichungstag der Anmeldung: 07.04.1993
(73) Patentinhaber: Weinhold, Wolfgang P., D-97084 Würzburg (DE)
(72) Erfinder: Weinhold, Wolfgang P., D-97084 Würzburg (DE)

(56) Entgegenhaltungen:
- EP-A- 0 122 254
- DE-A- 3 814 086
- DE-C- 890 462
- DE-C- 3 419 368
- GB-A- 791 888
- GB-A- 2 003 982

## Beschreibung

Die Erfindung bezieht sich auf ein Kraftfahrzeug mit einer Kühlvorrichtung für seinen Verbrennungsmotor gemäß Anspruch 1.

Bei einer durch die DE-A-38 14 086, FIG 6 bekannten Kühlvorrichtung für einen Verbrennungsmotor in einem Kraftfahrzeug werden aus einem spiralförmigen Luftführungsgehäuse eines dort zur Luftförderung im Motorraum oberhalb von zwei V-förmig angeordneten Wärmetauschern eingebauten Radiallüfters je eine Warmluftströmung zu jedem der beiden Wärmetauscher gefördert, die anschließend nach Passieren der Wärmetauscher unten aus dem Motorraum austreten sollen. Durch Öffnen einer Frischluftklappe im Luftführungsgehäuse kann ein Teil der eintretenden Frischluft als Kühlluft direkt in den Motorraum einströmen.

Eine durch die DE-A-30 15 941 bekannte Kühlvorrichtung weist einen hinter einem Lufteinlaß im Fahrzeugbug angeordneten Kühler sowie einen den Kühler umgebenden, mittels einer thermostatgesteuerten Klappe freigebbaren Kühlluft-Bypass zur direkten Kühlluft-Beaufschlagung zu kühlender Teile der Brennkraftmaschine auf. Dazu ist hinter dem Kühler in einem Luftkanal ein Gebläse durch den Thermostaten zwischen einer ersten Betriebsstellung, in der die Bewegungsbahn seiner Flügel im wesentlichen nur hinter dem Kühler verläuft, und einer zweiten Betriebsstellung, in der die Bewegungsbahn der Flügel in den Bypass hineinragt, bewegbar angeordnet. Der Luftkanal mündet eingangsseitig direkt an den Ausgang des Kühlers und an den durch eine erste Absperrklappe verschließbaren Ausgang des Kühlluft-Bypasses und ausgangsseitig einerseits in obere Austrittsöffnungen in der Motorhaube sowie andererseits in eine durch eine zweite Absperrklappe verschließbare Öffnung zu dem den Verbrennungsmotor aufnehmenden Motorraum. Bei relativ niedrigen Temperaturen im Motorraum befinden sich die erste und die zweite Absperrklappe in Schließstellung und der Ventilator in seiner ersten Betriebsstellung, so daß die durch die Lufteintrittsöffnungen angesaugte, im Wärmetauscher erwärmte Luft im wesentlichen durch die Austrittsöffnungen in der Motorhaube nach außen abgeleitet wird. Wird die Temperatur im Motorraum zu hoch, so daß beispielsweise die Gefahr der Kraftstoffverdampfung entsteht, werden die erste und die zweite Absperrklappe geöffnet und der Ventilator in seine zweite Betriebsstellung geschwenkt, so daß nunmehr durch die durch die zweite Absperrklappe zuvor geschlossene Öffnung sowohl vom Wärmetauscher erwärmte Luft als auch über den Kühlluft-Bypaß unerwärmte Kühlluft direkt von der Lufteintrittsseite zu dem Verbrennungsmotor gefördert werden.

Durch EP-A-0122254 ist weiterhin eine Kühlanlage für Fahrzeuge bekannt, bei der jedoch keine kompakte Einheit von Bypass und Ventilator-Wärmetauscher aufgezeigt ist; vielmehr bilden Bypass Kaltluftkanäle baulich und somit auch räumlich getrennte Elemente. Darüber hinaus wird keine Möglichkeit aufgezeigt den gesamten Förderstrom des Ventilators ausschließlich in den Bypass-Kaltluftkanal zu leiten.

Durch die DE-C-890 462 ist weiterhin eine Kühlanlage für Kraftfahrzeuge bekannt, bei der von einem auf einer Motorabtriebswelle befestigten, axial vor einem Wärmetauscher angeordneten Axiallüfter die gesamte Frischluft durch den Wärmetauscher und anschließend über eine Warmluftkanal nach unten in den Motorraum geleitet wird; durch eine Thermostatgesteuerte Absperrklappe am Ausgang des Warmluftkanals soll durch Verringerung des Luftdurchsatzes durch den Kühler eine raschere Erwärmung des Kühlwassers bei noch kaltem Motor erreicht werden.

Eine demgegenüber bei einfacherer und kompakterer Bauweise den unterschiedlichen Kühlungs- bzw. Erwärmungserfordernissen besser anpaßbare Kühlvorrichtung der eingangs genannten Art kann durch die Lehre des Anspruchs 1 geschaffen werden; vorteilhafte Ausgestaltungen der Erfindung sind jeweils Gegenstand der abhängigen Ansprüche.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

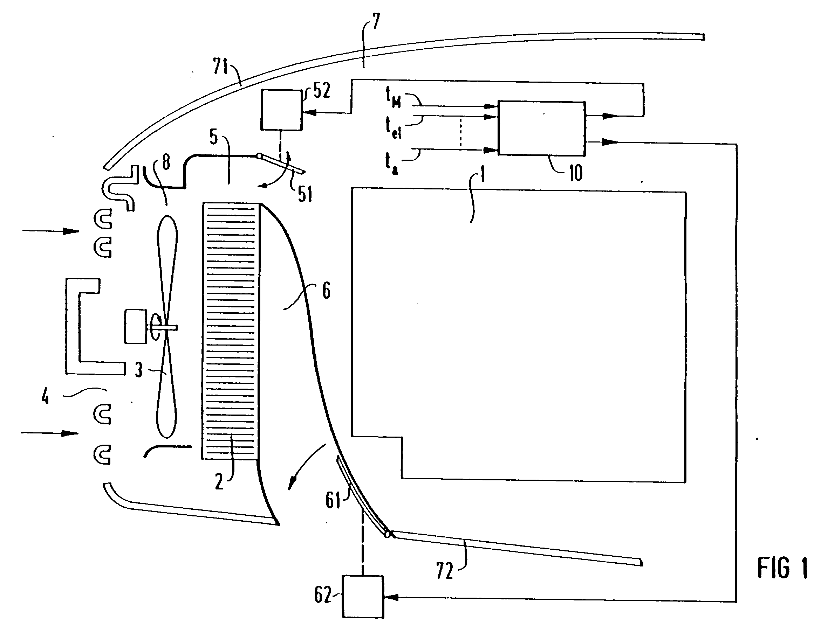

- FIG 1: einen axialen Längsschnitt durch einen Kraftfahrzeug-Motorraum mit einer Steuerung der Absperrklappen.
- FIG 2: den Motorraum gemäß FIG 1 mit einer gezielten Kühlluftführung in den Motorraum.
- FIG 3: die Anordnung nach FIG 2 im Teilschnitt gemäß Schnittverlauf III-III.

In einem nach oben durch eine Motorhaube 71, nach unten durch ein Bodenblech 72 und zur Bugseite durch einen Frischlufteintritt 4 begrenzten Motorraum 7 ist ein Verbrennungsmotor 1 angeordnet, dessen Kühlflüssigkeit durch einen Wärmetauscher 2 gefördert werden kann. Zwischen der linken Vorderseite des Wärmetauschers 2 und dem Frischlufteintritt 4 ist ein Axialventilator 3 innerhalb einer Einlaufdüse 8 angeordnet, die Bestandteil eines den Wärmetauscher 2 aufnehmenden Gehäuses sein kann, das auch einen Bypaß-Kaltluftkanal 5 und einen Warmluftkanal 6 enthält. Sowohl der Bypaß-Kaltluftkanal 5 als auch der Warmluftkanal 6 kann durch ein Absperrmittel, insbesondere eine Absperrklappe 51 bzw.61 derart verschlossen werden, daß kein Luftstrom durch den jeweiligen Kanal erfolgt. Zweckmäßigerweise sind die erste Absperrklappe 51 und/oder die zweite Absperrklappe 61 mit Zwischenstellungen zwischen ihren Endstellungen über Stellantriebe 52 bzw. 62 in Einstellabhängigkeit von einer Steuervorrichtung 10 derart gestellt, daß für den Verbrennungsmotor 1 und gegebenenfalls dessen Hilfsaggregate eine optimale Betriebstemperatur, z.B. im Sinne optimaler Verbrauchs- und/oder Abgaswerte gestellt ist; dazu werden der Steuervorrichtung 10 als Istwerte insbesondere die Motortemperatur t_{M} , die Temperatur tₑₗ einer im Motorraum installierten und zu kühlenden Elektronik sowie die Außentemperatur tₐ der angesaugten Außen-Kühlluft als Istwerte vorgegeben.

Auf diese Weise ist es möglich, z.B. bei einer nach einem Ausgestaltung der Erfindung vorgesehenen gekapselten Motorraum 7, durch Schließen der Absperrklappe 51 eine Abschottung des Motorraums gegenüber der Stauluft bzw. der durch den Ventilator geförderten Kühlluft zu erzielen und somit eine möglichst schnelle Erwärmung eines kalten Verbrennungsmotors auf seine Betriebstemperatur zu gewährleisten; andererseits kann bei stark erhitztem Verbrennungsmotor durch Schließen der Absperrklappe 61 und Öffnen der Absperrklappe 51 erreicht werden, daß die gesamte Stauluft und/oder durch den Ventilator durch den Frischlufteintritt 4 angesaugte Kaltluft über den Bypaß-Kaltluftkanal in den Motorraum gedrückt und damit zur Kühlung des Verbrennungsmotors 1 bzw. gegebenenfalls im Motorraum angeordneter Elektronik ausnutzbar ist.

Die Kühlluft wird entweder durch einen am Bug des Fahrzeuges anstehenden Staudruck und/oder durch den zwischen dem Frischlufteintritt 4 und dem Wärmetauscher 2 fest und unter Beanspruchung nur eines kleinen Einbauraums installierter Axialventilator 3 zu der Frontseite des Wärmetauschers 2 bzw. der Eingangsöffnung des oberhalb des Wärmetauschers 2 verlaufenden Bypaß-Kaltluftkanals 5 gefördert.

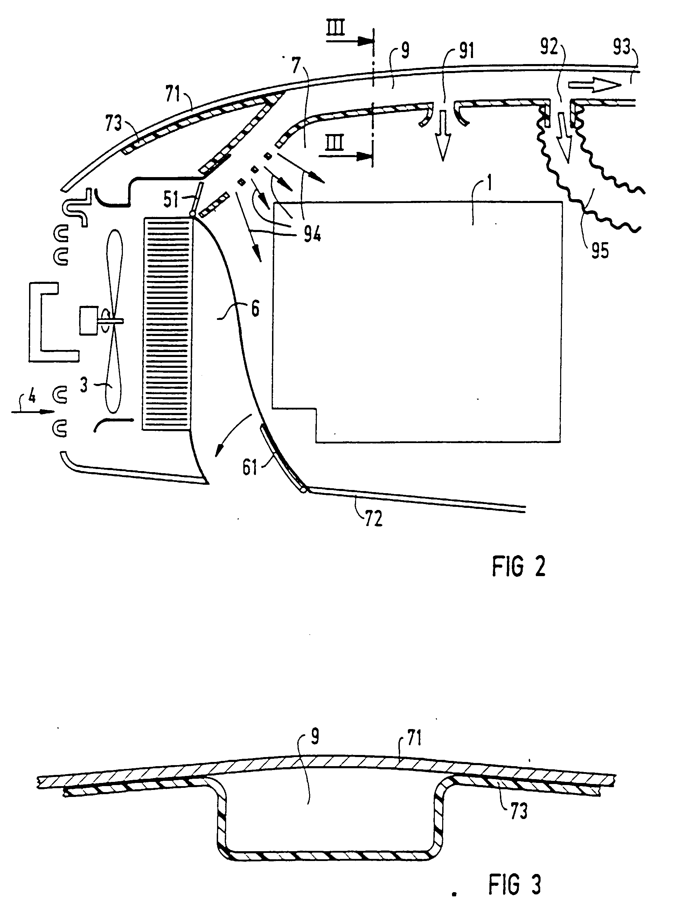

Gemäß FIG 2,3 ist zur gezielten Kühlluftzuführung ("ducted cooling") zu eine verstärkte Kühlung benötigenden Bauteilen ("hot spots") des Verbrennungsmotors 1 bzw. einer Elektronik nach einer Ausgestaltung der Erfindung an den Bypaß-Kaltluftkanal 5 zumindest ein in den Motorraum 7 führender Kühlluftkanal 9 mit Strahlöffnungen 91, z.B. zu einem verstärkt erhitzten Teil des Verbrennungsmotors, Strahlöffnungen 92, z.B. zu dem die elektrische Stromversorgung gewährleistenden Generator über einen flexiblen Luftschlauch 95 oder zu Strahlöffnungen 93, z.B. zu einem Elektronik-Modul an der Spritzwand unterhalb der Frontscheibe des Kraftfahrzeuges vorgesehen. Eine von dem Ausgang des Bypaß-Kaltluftkanals 5 abzweigende Diffus-Kühlluftströmung für den gesamten Motorraum 7 kann z.B. direkt als Parallelabzweig zu dem Anschluß des Motorraum-Kühlluftkanals 9 oder in besonders einfacher Weise - wie in FIG 2 angedeutet - über eingangsseitige Diffusströmungsöffnungen 94 im ersten Teil des Motorraum-Kühlluftkanals 9 erfolgen.

In konstruktiv einfacher und geräuschdämmend vorteilhafter Weise ist der Motorraum-Kühlluftkanal 9 integraler Bestandteil einer Geräuschdämmung im Motorraum 7, insbesondere einer Geräuschdämmverkleidung 73 für die Motorhaube 71.

## Patentansprüche

1. Kraftfahrzeug mit einer Kühlvorrichtung für seinen Verbrennungsmotor (1) mit folgenden Merkmalen:
a.) Ein Axialventilator (3) innerhalb einer Einlaufdüse (8) zur Förderung von Kühlluft ist axial vor einem Wärmetauscher (2) angeordnet;
b.) der Axialventilator (3) und der von einem Gehäuse aufgenommene Wärmetauscher (2) sind zwischen einem Frischlufteintritt (4) und dem Verbrennungsmotor (1) angeordnet;
c.) an den Ausgang des Wärmetauschers (2) schließt sich ein Warmluftkanal (6) an zur Ableitung von Kühlluft aus dem Frischlufteintritt nach Durchströmen des Wärmetauschers (2) an dem Verbrennungsmotor (1) vorbei;
d.) der Warmluftkanal (6) ist hinter dem Wärmetauscher (2) mit einem Absperrmittel zur Verhinderung eines Warmluftaustritts versehen.
e.) von dem Frischlufteintritt (4) führt an dem Wärmetauscher (2) vorbei ein von dem Warmluftkanal (6) baulich getrennter Bypass-Kaltluftkanal (5) zu dem Verbrennungsmotor (1);
f.) der Bypass-Kaltluftkanal (5) ist mit einem Absperrmittel zur Verhinderung eines Kaltluftaustritts versehen;
g.) wobei der Bypass-Kaltluftkanal (5) und der Warmluftkanal (6) Teile des den Wärmetauscher (2) aufnehmenden Gehäuses sind und der Bypass-Kaltluftkanal (5) anschließend an die Einlaufdüse (8) und direkt angrenzend an den Rand des Wärmetauschers (2) ausgebildet ist.

2. Kraftfahrzeug nach Anspruch 1, wobei das Absperrmittel zur Verhinderung eines Kaltluftaustritts als Verschlußklappe (51) ausgebildet ist.

3. Kraftfahrzeug nach Anspruch 1 oder 2, wobei das Absperrmittel zur Verhinderung eines Warmluftaustritts als Verschlußklappe (61) ausgebildet ist.

4. Kraftfahrzeug nach einem der Ansprüche 1 - 3, wobei ein gekapselter, den Verbrennungsmotor (1) aufnehmender Motorraum (7) nur über den Bypass-Kaltluftkanal zugänglich ist.

5. Kraftfahrzeug nach einem der Ansprüche 1 - 4, dadruch gekennzeichnet, daß die erste Verschlußklappe (51) und/oder die zweite Verschlußklappe (61) in Stellabhängigkeit von einer eine optimale Betriebstemperatur des Verbrennungsmotors (1) überwachenden Steuervorrichtung (10) gestellt sind.

6. Kraftfahrzeug nach einem der Ansprüche 1 - 5, dadurch gekennzeichnet, daß im Sinne einer gezielt gelenkten Kühlluftführung an den Bypass-Kaltluftkanal (5) zumindest ein mit Strahlöffnung (91, 92, 93) zum Motorraum (7) versehener Motorraum-Kühlluftkanal (9) angeschlossen ist.

7. Kraftfahrzeuge nach Anspruch 6, gekennzeichnet durch auf Bereiche erhöhten Kühlbedarfs gerichtete Strahlöffnungen (91, 92).

8. Kraftfahrzeug nach Anspruch 6 oder 7, dadurch gekennzeichnet, daß der Motorraum-Kühlluftkanal (9) integraler Bestandteil einer Geräuschdämmung im Motorraum (7) , insbesondere einer Geräuschdämmverkleidung (73) für die Motorhaube ist.

## Claims

1. Motor vehicle with a cooling device for its combustion engine with following characteristics:
a) an axial fan (3) inside an intake nozzle (8) is arranged axially in front of a heat exchanger (2) in order to transport cool air;
b) the axial fan (3) and the heat exchanger, which in held in housing, are arranged between an entry of cool air (4) and the combustion engine;
c) a warm air duct (6) is connected to the outlet of the heat exchanger to lead cool air through the cool air inlet (4) to flow through the heat exchanger (2) past the combustion engine(1)
d) the warm air duct (6) is provided with a blocking device behind the heat exchanger (2) in order to prevent warm air from leaving.
e) a bypass cool air duct (5), which is separated from the warm air duct (6), leads from the cool air inlet (4) past the heat exchanger (2) to the combustion engine (1)
f) the bypass cool air duct (5) is provided with a blocking device to prevent cold air from leaving.
g) the bypass cool air duct (5) and the warm air duct (6) are components of the housing/casing in which the heat exchanger is arranged, and the bypass cool air duct (5) is connected to both the intake nozzle (8) and the edge of the heat exchanger (2).

2. Motor vehicle according to claim 1, but the blocking device that prevents cold air from leaving is designed as a sealing flap (51).

3. Motor vehicle according to claim 1 or 2 , but the blocking device that prevents warm air from leaving is designed as a sealing flap (61).

4. Motor vehicle according to one of claims 1-3, but an enclosed engine compartment (7), in which the combustion engine is arranged, is accessible only through the bypass-duct of cold air.

5. Motor vehicle according to one of the claims 1-4 and characterized by the fact that the first sealing flap (51) and/or the second sealing flap (61) are controled by a control and servo unit (10) there one parameter is an optimal temperature for the engine.

6. Motor vehicle according to one of the claims 1-5 and characterized by the fact that at least the object of directing the cool air way to the bypass cool air duct, one cool air duct (9), which is provided with a jet opening (91, 92, 93), is connected to the engine compartment.

7. Motor vehicles according to claim 6, characterized by the fact that jet openings (91,92) are directed to areas of increased cooling necessity.

8. Motor vehicle according to claims 6 or 7, characterized by the fact that the cold air duct of the engine compartment (9) is an integral component of a noise reducer in the engine compartment (7), particularly for the engine bonnet.

## Revendications

1. Véhicule automobile comportant un dispositif de refroidissement pour son moteur à combustion interne (1), avec les caractéristiques suivantes:
a.) Un ventilateur axial (3) se trouvant à l'intérieur d'une buse d'admission (8), qui est destiné au déplacement de l'air de refroidissement, est disposé axialement en amont d'un échangeur de chaleur (2);
b.) le ventilateur axial (3) et l'échangeur de chaleur (2) logé dans un carter sont disposés entre une admission d'air frais et le moteur à combustion interne (1);
c.) à la sortie de l'échangeur de chaleur (2) est raccordé un conduit à air chaud (6) destiné à évacuer l'air de refroidissement hors de l'admission d'air frais après que celui-ci a traversé l'échangeur de chaleur (2) au moteur à combustion interne (1);
d.) le conduit à air chaud (6) est pourvu en aval de l'échangeur de chaleur (2) d'un moyen d'arrêt destiné à empêcher toute sortie d'air chaud;
e.) à partir de l'entrée d'air frais (4), un conduit à air froid de bipasse (5) séparé au niveau construction du conduit à air chaud (6) passe à côté de l'échangeur de chaleur (2) pour aller rejoindre le moteur à combustion interne (1);
f.) le conduit à air froid de bipasse (5) est pourvu d'un moyen d'arrêt destiné à empêcher toute sortie d'air chaud;
g.) le conduit à air froid de bipasse (5) et le conduit à air chaud (6) étant des parties constitutives du carter recevant l'échangeur de chaleur (2) et le conduit à air froid de bipasse (5) aboutissant ensuite à la buse d'entrée (8) et, de façon directement adjacente, à la bordure de l'échangeur de chaleur (2);

2. Véhicule automobile répondant à la revendication de brevet 1, mais le moyen d'arrêt destiné à empêcher toute sortie d'air froid étant conçu sous forme de volet de fermeture (51).

3. Véhicule automobile répondant à la revendication de brevet 1 ou 2, mais le moyen d'arrêt destiné à empêcher toute sortie d'air froid étant conçu sous forme de volet de fermeture (61).

4. Véhicule automobile répondant à l'une des revendication de brevet 1 à 3, mais un compartiment de moteur (7) scellé dans lequel est logé le moteur à combustion interne (1) étant accessible uniquement par l'intermédiaire du conduit à air froid de bipasse.

5. Véhicule automobile répondant à l'une des revendication de brevet 1 à 4 caractérisé par le fait que le premier volet de fermeture (51) et / ou le deuxième volet de fermeture (61) sont tributaires, du point de vue de leur réglage, du dispositif de commande (10) assurant la surveillance d'une température de service optimale du moteur à combustion interne (1)

6. Véhicule automobile répondant à l'une des revendication de brevet 1 à 5 caractérisé par le fait que, dans le sens d'un déplacement ciblé de l'air de refroidissement à destination du conduit à air froid de bipasse (5), au moins un conduit à air de refroidissement (9) pourvu d'un orifice de projection (91, 92, 93) à destination du compartiment du moteur (7) soit raccordé.

7. Véhicule automobile répondant à la revendication du brevet 6 caractérisé par des orifices de projection (91, 92) dirigés sur des zones ayant un besoin en air de refroidissement accru.

8. Véhicule automobile répondant aux revendications de brevet 6 ou 7 caractérisé par le fait que conduit à air de refroidissement du compartiment du moteur (9) est une partie intégrante d'un amortissement des bruits dans le compartiment du moteur (7), notamment d'un habillage d'amortissement des bruits (73) pour le capot du moteur.
